(19) **Europäisches Patentamt / European Patent Office / Office européen des brevets**

(11) **EP 3 282 406 A1**

(12) **EUROPEAN PATENT APPLICATION**

(43) Date of publication:
14.02.2018 Bulletin 2018/07

(51) Int Cl.:
*G06Q 10/04* (2012.01)   *G06Q 10/06* (2012.01)
*G06Q 10/10* (2012.01)   *G06Q 50/04* (2012.01)

(21) Application number: 17180251.5

(22) Date of filing: 07.07.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.08.2016   JP 2016159017**

(71) Applicant: **Fujitsu Limited
Kawasaki-shi, Kanagawa 211-8588 (JP)**

(72) Inventors:
• **KOBAYASHI, Sachio
Kawasaki-shi, Kanagawa 211-8588 (JP)**
• **MURAKAMI, Ryo
Kawasaki-shi, Kanagawa 211-8588 (JP)**
• **SHIMADA, Daichi
Kawasaki-shi, Kanagawa 211-8588 (JP)**
• **KOBAYASHI, Hiroki
Kawasaki-shi, Kanagawa 211-8588 (JP)**

(74) Representative: **Haseltine Lake LLP
Lincoln House, 5th Floor
300 High Holborn
London WC1V 7JH (GB)**

(54) **PROCESS PLANNING SUPPORT APPARATUS, PROCESS PLANNING SUPPORT METHOD, AND PROCESS PLANNING SUPPORT PROGRAM**

(57)    A process planning support apparatus according to an embodiment includes a setting unit (12), a first calculation unit (14), a second calculation unit (15), and an output unit (16). The setting unit (12) sets allocation of works with respect to each of work stations in an assembly line. The first calculation unit (14) calculates work times corresponding to work subjects of the work stations based on library data of each of unit works, in which each unit work is expressed by a combination of element works each having motions as constituent elements, for the works allocated to the work stations, respectively. The second calculation unit (15) calculates evaluation indexes of the work stations based on the calculated work times, respectively. The output unit (16) outputs the calculated evaluation indexes.

FIG.1

**Description**

FIELD

The embodiment discussed herein is related to a process planning support apparatus, a process planning support method, and a process planning support program.

BACKGROUND

Conventionally, process planning to allocate works to work stations, respectively, in an assembly line for performing assembly of products is created by a designer while evaluating the work time or cost in each of the work stations. For creation of the process planning, a process planning support apparatus that generates an order in which the cost calculated by a simulator verifying an assembly work is the lowest, and that divides processes to equalize costs of the processes, thereby designing process planning is known.

However, in the case of process planning for an assembly line in which humans and robots are mixed in work stations, creation of the process planning may include many man-hours and is not easy even if the process planning is created by a professional designer.

For example, the work time may greatly vary depending on a work subject such as a robot and a human even when contents of a work are the same. Considering a work of assembling components as an example, the work time can be estimated from the time of each of elements such as grasp, carry, paste, and press when the work subject is a human. However, when the work subject is a robot, fine movements such as approach, hold, and lift need to be considered as for the element of grasp, for example, and settings on these fine movements are handled manually by the designer.

Accordingly, it is desirable to provide a process planning support apparatus, a process planning support method, and a process planning support program that can easily create process planning for an assembly line.

SUMMARY

The present invention is defined by the appended independent claims, to which reference should now be made. Specific embodiments are defined in the dependent claims.

According to an embodiment of one aspect of the invention, a process planning support apparatus includes: a setting unit that sets allocation of works with respect to each of work stations in an assembly line; a first calculation unit that calculates work times corresponding to work subjects of the work stations based on library data of each of unit works, in which each unit work is expressed by a combination of element works each having motions as constituent elements, for the works allocated to the work stations, respectively; a second calculation unit that calculates evaluation indexes of the work stations based on the calculated work times, respectively; and an output unit that outputs the calculated evaluation indexes.

BRIEF DESCRIPTION OF DRAWINGS

Embodiments of the invention are set out, by way of example only, with reference to the following drawings, in which:

FIG. 1 is a block diagram illustrating a functional configuration example of a process planning support apparatus according to an embodiment;
FIG. 2 is an explanatory diagram for explaining an assembly line;
FIG. 3 is an explanatory diagram for explaining outputting of an evaluation result;
FIG. 4 is an explanatory diagram for explaining an assembly-work module library;
FIG. 5 is an explanatory diagram for explaining a configuration example of an assembly work module;
FIG. 6 is an explanatory diagram for explaining an example of an assembly work;
FIG. 7 is an explanatory diagram for explaining order restrictions on an assembly work;
FIG. 8 is a flowchart illustrating an operation example of the process planning support apparatus according to the embodiment;
FIG. 9 is a flowchart illustrating an example of processing of calculating a work time; and
FIG. 10 is a block diagram illustrating a hardware configuration example of the process planning support apparatus according to the embodiment.

DESCRIPTION OF EMBODIMENT

Preferred embodiments of the present invention will be explained with reference to accompanying drawings. In the embodiments, constituent elements having the same functions are denoted by like reference signs and redundant explanations thereof will be omitted. The process planning support apparatus, the process planning support method, and the process planning support program described in the following embodiments are only examples and the embodiments are not limited thereto. Each of the embodiments described below may be combined appropriately within a scope in which no contradiction occurs.

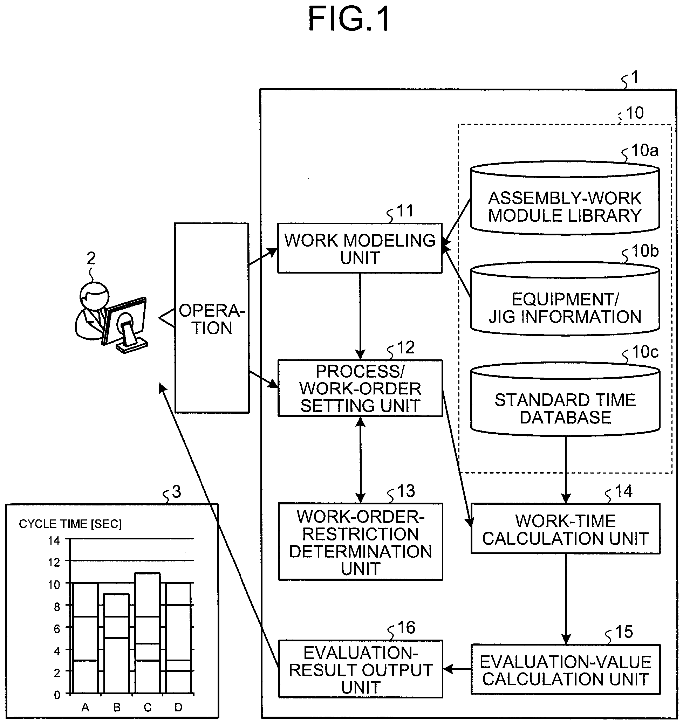

FIG. 1 is a block diagram illustrating a functional configuration example of a process planning support apparatus according to an embodiment of the present invention. As illustrated in FIG. 1, a process planning support apparatus 1 is an information processor such as a PC (Personal Computer) and has a storage unit 10, a work modeling unit 11, a process/work-order setting unit 12, a work-order-restriction determination unit 13, a work-time calculation unit 14, an evaluation-value calculation unit 15, and an evaluation-result output unit 16.

The process planning support apparatus 1 receives process planning in which works of assembling products are allocated to work stations (processes), respectively, in an assembly line for performing assembly of products according to an operation of a user 2. The process planning support apparatus 1 then calculates an evaluation result 3 of the process planning received from the user 2 and displays the evaluation result 3 on a display or the like to output the evaluation result 3 of the process planning to the user 2. The user 2 creates actual process planning based on the evaluation result 3.

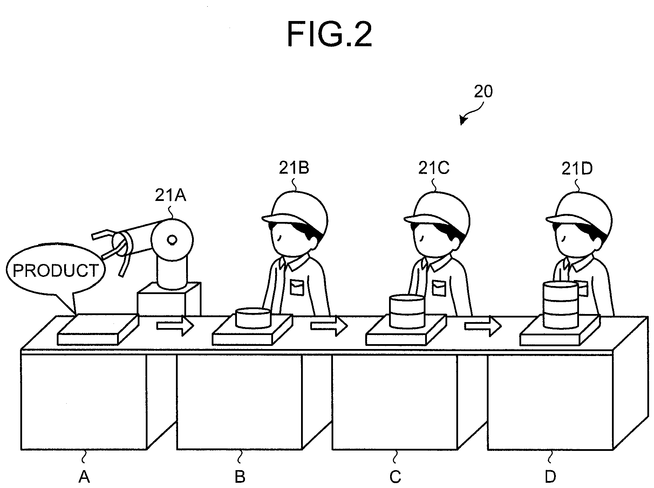

FIG. 2 is an explanatory diagram for explaining an assembly line. As illustrated in FIG. 2, an assembly line 20 for performing assembly of products has four processes at work stations A to D as an example of the present embodiment.

In the assembly line 20, products are carried to the next work station by a conveyor belt (not illustrated) or the like according to a takt time (a time limit) defined from production planning. A robot 21A and workers 21B to 21D are placed at the work stations A to D in the assembly line 20. In the illustrated example, the robot 21A is placed at the work station A, and the workers 21B to 21D are placed at the work stations B to D, respectively.

Works based on the process planning are allocated to the work stations A to D in the assembly line 20. The robot 21A and the workers 21B to 21D placed at the work stations A to D, respectively, perform the works allocated according to the process planning to the products carried in the assembly line 20 to produce the products.

The configuration example of the assembly line 20 is not limited to that illustrated in FIG. 2. For example, the assembly line 20 can have more than four processes (work stations). The placement position of the robot 21A can be other than the work station A and the robot 21A can be provided in plural.

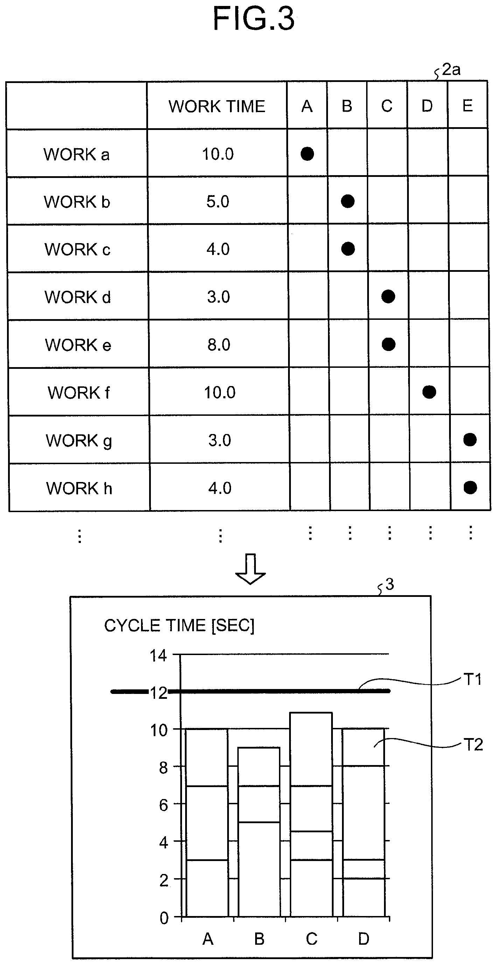

FIG. 3 is an explanatory diagram for explaining outputting of the evaluation result 3. As illustrated in FIG. 3, the process planning support apparatus 1 calculates work times of respective works (a to h in the illustrated example) allocated to the work stations (A to E in the illustrated example) based on the process planning received from the user 2. The calculated work times are saved in a work time table 2a indicating the work times of the respective works at the respective work stations.

The process planning support apparatus 1 outputs the evaluation result 3, which is an evaluation index calculated for each of the work stations based on the work time table 2a. Specifically, as illustrated in FIG. 3, the evaluation result 3 can be a graph of a takt time T1 and the total work time (a cycle time) being the sum of work times T2 at each of the work stations in the work time table 2a.

Alternatively, the evaluation result 3 can be a graph of a running cost obtained by multiplying the cycle time at each of the work stations in the work time table 2a by a cost coefficient. The user 2 can know an evaluation of the process planning input and set in the process planning support apparatus 1 based on the graph of the evaluation result 3 indicating the evaluation indexes of the respective work stations, and can refer to the graph when creating actual process planning.

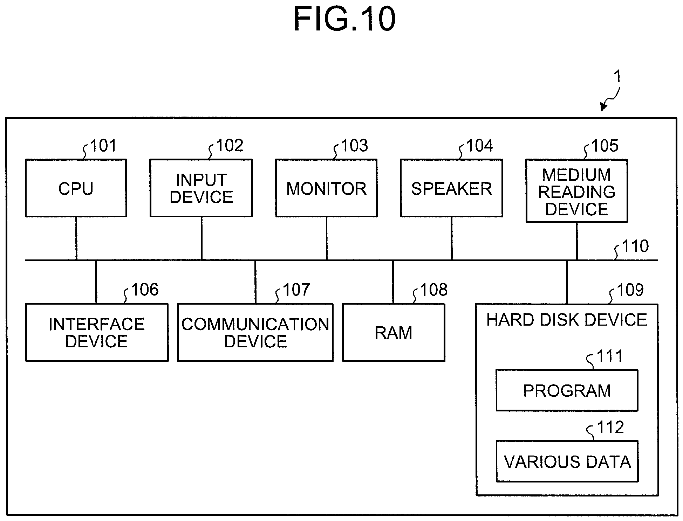

Referring back to FIG. 1, the storage unit 10 is a storage device such as a hard disk device 109 (see FIG. 10) and stores therein an assembly-work module library 10a, equipment/jig information 10b, and a standard time database (hereinafter, DB) 10c.

The assembly-work module library 10a is library data of each of unit works, in which each unit work is expressed as a module by combining element works each including motions as constituent elements for each of works as targets to be allocated to the work stations A to D, respectively.

An element work is a work in a minimum unit that provides a state change to a component, a tool, equipment, or the like by a series of motions being the constituent elements. A unit work is a work in one unit that provides a change for approaching to a completed state to a product.

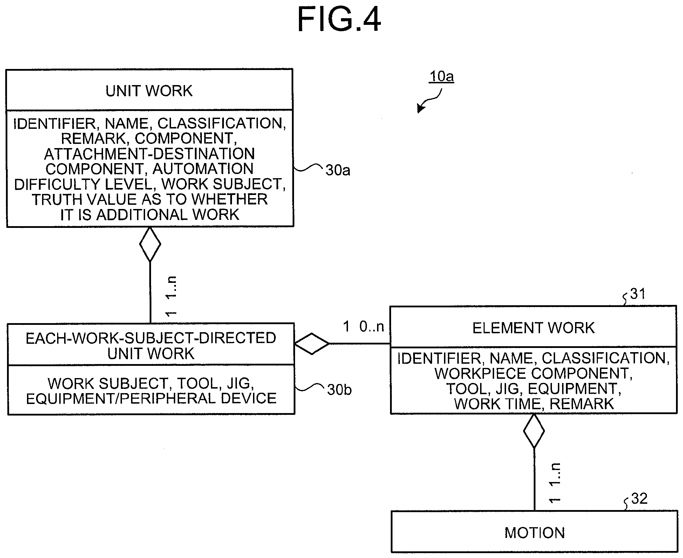

FIG. 4 is an explanatory diagram for explaining the assembly-work module library 10a. As illustrated in FIG. 4, the assembly-work module library 10a has a data configuration in which a unit work 30a, an each-work-subject-directed unit work 30b, an element work 31, and a motion 32 layered in this order.

The unit work 30a has information about a work in one unit, such as an identifier, a name, a classification, a remark, a component, an attachment-destination component, an automation difficulty level, a work subject, and a truth value as to whether a work is an additional work.

The identifier in the unit work 30a is identification information that identifies a work. The name and the classification are information indicating the name and the classification of a work. The remark is a remark column for a work and includes, for example, restriction information such as an execution order of the work. The component and the attachment-destination component are information indicating components related to a work.

The automation difficulty level indicates the difficulty level in a case where a work is performed by the robot 21A. For example, when a work is performed by the robot 21A, the cost of the work can be obtained based on the automation difficulty level. For example, when the difficulty level of a work performed by the robot 21A is high, the initial cost of the robot 21A becomes high and thus the cost may be calculated to be high according to the height of the difficulty level.

The work subject is information indicating a subject (a robot or a worker) that performs a work. The truth value as to whether a work is an additional work is information (a flag) indicating whether the work is an additional work.

The each-work-subject-directed unit work 30b is information indicating a unit work directed to each work subject in the unit work 30a and has information such as a work subject, a tool, a jig, and an equipment/peripheral device. The work subject indicates a subject that performs a work. The tool, the jig, and the equipment/peripheral device indicate a tool, a jig, and an equipment/peripheral device used by a work subject for the relevant work. The unit work 30a and the each-work-subject-directed unit work 30b are also referred to as "unit work 30" when these are not particularly distinguished.

The element work 31 is information of an element work that is linked to the unit work 30 and is combined with the unit work 30 using an identifier or the like. The element work 31 has information such as an identifier, a name, a classification, a workpiece component, a tool, a jig, equipment, a work time, and a remark.

The identifier in the element work 31 is identification information that identifies an element work. The name and the classification are information indicating the name and the classification of an element work. The workpiece component, the tool, the jig, and the equipment are information indicating a workpiece component, a tool, a jig, and equipment related to an element work. The work time is information indicating an estimated work time of an element work. The remark is a remark column for an element work.

The motion 32 is information of motions that are linked to the element work 31 using identifiers or the like and that become constituent elements (also "motion elements") of the element work 31.

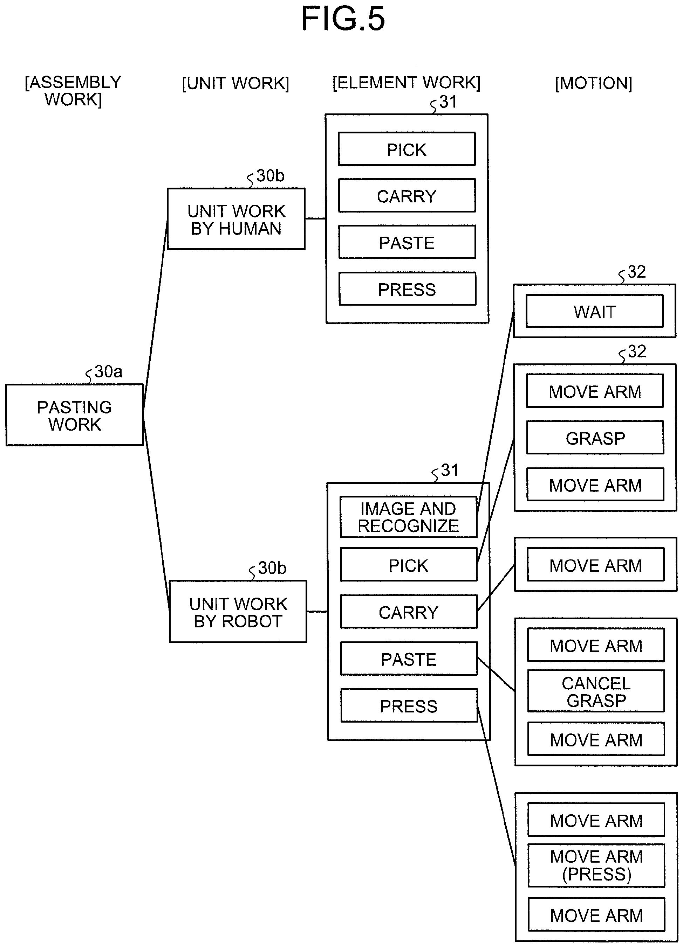

FIG. 5 is an explanatory diagram for explaining a configuration example of an assembly work module. As illustrated in FIG. 5, an assembly work module in one assembly work ("pasting work" in an illustrated example) of the assembly-work module library 10a includes a unit work, element works, and motions with respect to each of work subjects (a human or a robot), which are combined in a layered manner (four layers in the illustrated example).

Specifically, a unit work 30a being "pasting work" has the work-subject-directed unit work 30b corresponding to a human or a robot. For example, in the case of a human, the work-subject-directed unit work 30b has element works 31 including "pick", "carry", "paste", and "press". In the case of a robot, the work-subject-directed unit work 30b has element works 31 including "image and recognize", "pick", "carry", "paste", and "press". The element works 31 of the robot have motions 32 of the robot for each of the element works, including "wait", "move arm", and "grasp".

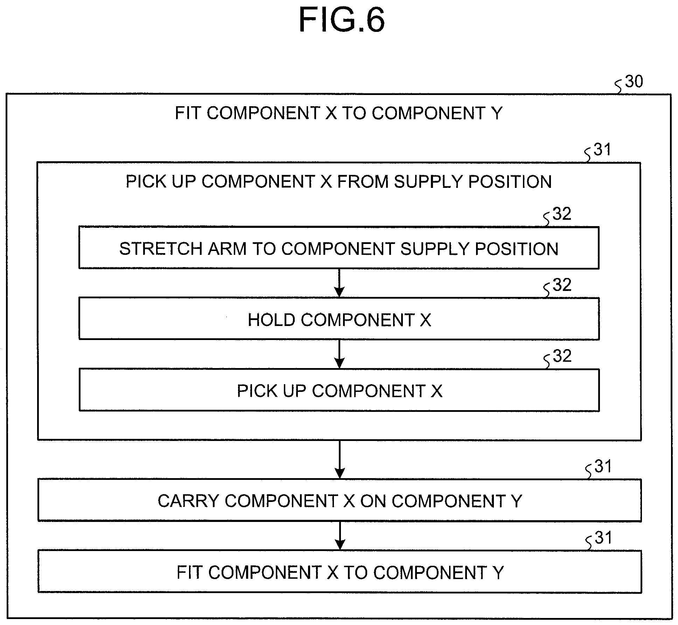

FIG. 6 is an explanatory diagram for explaining an example of an assembly work. As illustrated in FIG. 6, the assembly work such as "fit a component X to a component Y" can be expressed by arranging element works 31 and motions 32 to modularize one unit work 30. The entire work in process planning can be expressed by arranging modularized unit works 30.

Referring back to FIG. 1, the equipment/jig information 10b is information about equipment or a jig to be used in each work. Specifically, a parameter on a work time taken by equipment or a jig in an additional work is set for each piece of equipment or a jig in the equipment/jig information 10b. The standard time DB 10c is a database in which a standard time of each motion in a human or a robot is previously defined. A value previously calculated according to a method such as a PTS (Predetermined Time Standard) method or a MOST (Maynard Operation Sequence Technique) method is set as the standard time.

The work modeling unit 11 refers to the assembly-work module library 10a with respect to each of works (unit works 30) included in the process planning received according to the operation of the user 2 and modularizes works to generate a model (a module) of each of the unit works 30. The work modeling unit 11 outputs the generated models to the process/work-order setting unit 12.

The process/work-order setting unit 12 sets allocation of works to the respective work stations A to D (processes) in the assembly line 20 based on the process planning received according to the operation of the user 2. Specifically, the process/work-order setting unit 12 arranges the models of the respective unit works 30 generated by the work modeling unit 11 in a set work order to express the entire work in the process planning.

The work-order-restriction determination unit 13 checks (determines) whether the work order allocated by the process/work-order setting unit 12 meets restrictions on an execution order of the unit works 30 based on restriction information indicating an execution order of the respective unit works 30 in the assembly-work module library 10a. The work-order-restriction determination unit 13 outputs a result of the check to the process/work-order setting unit 12. When the order of the works in the process planning received according to the operation of the user 2 does not meet the restrictions, the process/work-order setting unit 12 outputs a warning to the user 2. This enables the user 2 to confirm that the order of the works in the process planning does not meet the restrictions previously set.

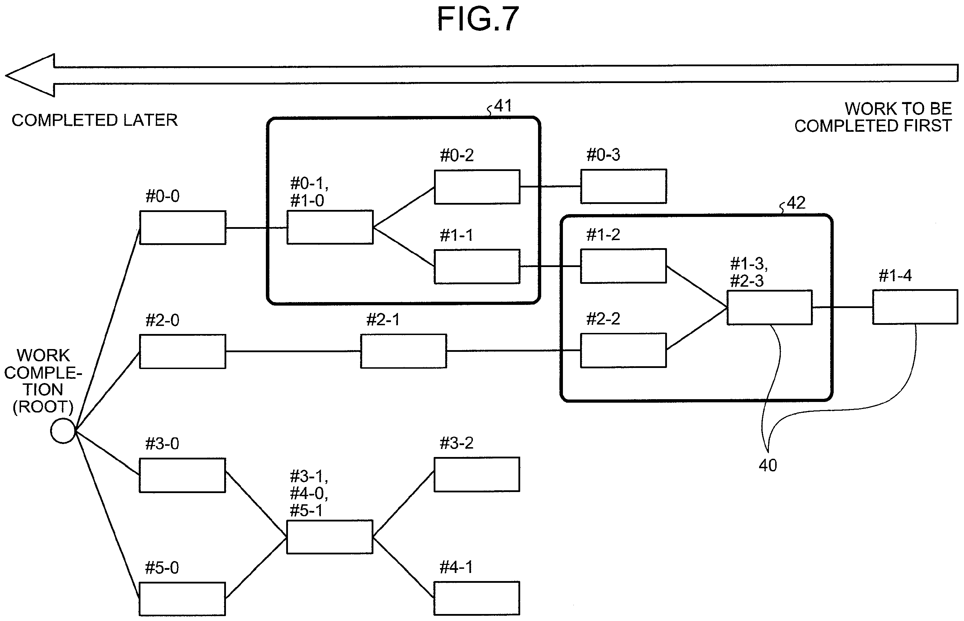

FIG. 7 is an explanatory diagram for explaining order restrictions on an assembly work. As illustrated in FIG. 7, an order of a product assembly work is expressed by a directed acyclic graph that has respective works leading to work completion (root) as nodes 40 and in which the nodes 40 are connected from a work to be completed first to works to be completed later.

The work-order-restriction determination unit 13 checks whether the order of the works in the received process planning meets the restrictions on the execution order using the directed acyclic graph.

Specifically, the work-order-restriction determination unit 13 searches for groups (immediately below the root) that have no parent group as for the order of the works in the received process planning. Next, the work-order-restriction determination unit 13 selects one group from the search result and searches for a child to recursively assign a number thereto. A number #i-(j+1) is assigned to a child based on a number (#i-j) of the parent group.

In a branch portion 41 having a plurality of child groups, a SubAssy number k instead of "i" is newly acquired for the second and subsequent child groups, so that #k-0 is assigned to the corresponding parent and #k-1 is assigned to the child. In a confluence portion 42 having a plurality of parents, a plurality of numbers are assigned. When a parent group having plural numbers have one child group, one of the numbers of the parent group, being lower (smaller) in the SubAssy number is assigned to the child group.

The work-order-restriction determination unit 13 performs following checks (1) to (3) to all the works to determine whether the execution order meets the order restrictions.

> (1) A node of a group to which a target work belongs is selected.
> (2) A child group is selected on the graph.
> (3) Whether all works included in the group selected in (2) have been performed earlier in the work order assigned with numbers (whether the works meet the restriction information) is confirmed.

The work-time calculation unit 14 calculates, for each of works set by the process/work-order setting unit 12 and allocated to each of the work stations A to D, a work time corresponding to a work subject at the relevant work station while referring to data modeled (modularized) in the assembly-work module library 10a.

The evaluation-value calculation unit 15 calculates an evaluation index of each of the work stations A to D based on the work times calculated by the work-time calculation unit 14. Specifically, the evaluation-value calculation unit 15 calculates the sum of work times of works allocated to the work stations A to D, respectively, to calculate a cycle time of each of the work stations A to D as the evaluation index. Furthermore, the evaluation-value calculation unit 15 multiplies the cycle time of each of the work stations A to D by a predetermined cost coefficient to calculate a cost corresponding to the cycle time of each of the work stations A to D as the evaluation index.

The evaluation-result output unit 16 outputs the evaluation index of each of the work stations A to D, calculated by the evaluation-value calculation unit 15, as the evaluation result 3 through file outputting or display outputting to a display.

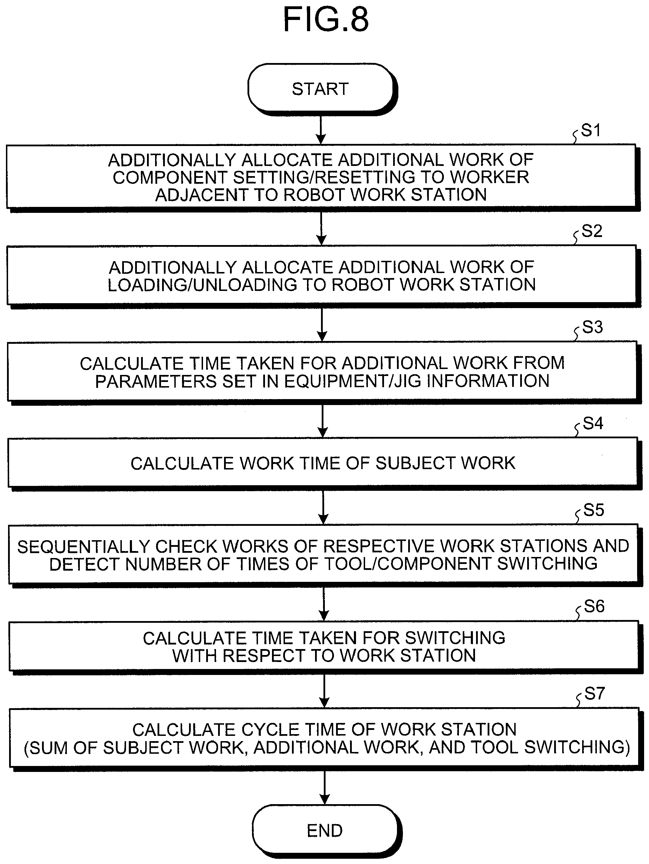

An operation of the process planning support apparatus 1, specifically, calculation of the work time in the work-time calculation unit 14 is described in detail next. FIG. 8 is a flowchart illustrating an operation example of the process planning support apparatus 1 according to the present embodiment. In FIG. 8, an operation example of the work-time calculation unit 14 after allocation of works to the work stations A to D (processes) in the assembly line 20 is set and the models of the respective unit works 30 are arranged in the set work order by the process/work-order setting unit 12 is illustrated.

As illustrated in FIG. 8, when processing is started, the work-time calculation unit 14 performs addition of an additional work and calculation of the work time of the additional work (Step S1 to Step S3), calculation of the work time of a subject work (Step S4), and calculation of a tool switching time (Step S5 and Step S6) with respect to each of the work stations A to D. The work-time calculation unit 14 calculates a cycle time from the sum of the times of the subject work, the additional work, and the tool switching (Step S7).

Specifically, at Step S1, the work-time calculation unit 14 additionally allocates an additional work of setting/resetting a component to the worker (21B) adjacent to the work station A of the robot 21A (Step S1). For example, with respect to a work in which an additional work truth value is true among works allocated to the work station A of the robot 21A, the work-time calculation unit 14 allocates the additional work of setting/resetting to the adjacent worker.

Next, the work-time calculation unit 14 additionally allocates an additional work of loading/unloading a component to the work station A of the robot 21A (Step S2). For example, with respect to a work in which the additional work truth value is true among the works allocated to the work station A of the robot 21A, the work-time calculation unit 14 additionally allocates the additional work of loading/unloading.

Subsequently, the work-time calculation unit 14 refers to parameters previously set in the equipment/jig information 10b and calculates the times taken for the additional works (setting/resetting and loading/unloading of a component) (Step S3).

Next, the work-time calculation unit 14 refers to data modeled (modularized) from the assembly-work module library 10a and calculates the work time of the subject work with respect to each of the work stations A to D (Step S4) .

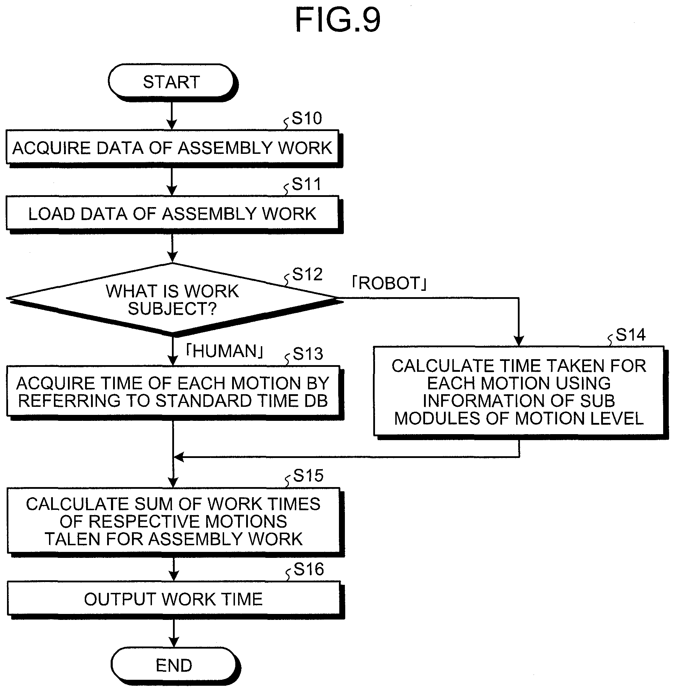

FIG. 9 is a flowchart illustrating an example of processing of calculating a work time. More specifically, FIG. 9 is a flowchart illustrating the processing of calculating the work time at Step S4.

As illustrated in FIG. 9, when the processing is started, the work-time calculation unit 14 acquire data (modularized data) indicating contents of the assembly work allocated to the work stations A to D, respectively (Step S10). Next, the work-time calculation unit 14 loads the acquired data of the assembly work, that is, loads the acquired data to data in the respective unit works 30 (Step S11).

Next, the work-time calculation unit 14 determines the work subject of the loaded assembly work (Step S12). Specifically, as for a work allocated to the work station A of the robot 21A, the work-time calculation unit 14 determines the work subject to be "robot". As for works allocated to the work stations B to D of the workers 21B to 21D, the work-time calculation unit 14 determines the work subject to be "human".

When the work subject is determined to be "human" at Step S12, the work-time calculation unit 14 acquires the work time of each motion by referring to the standard time DB 10c based on motion contents ("grasp", "carry", "paste", and "press", for example) of humans in the modules of the assembly work (see FIG. 5) (Step S13).

When the work subject is determined to be "robot" at Step S12, the work-time calculation unit 14 calculates the time taken for each motion using information (such as "approach", "hold", ⋯) of sub modules of a motion level of the robot in the modules of the assembly work (see FIG. 5) (Step S14).

Specifically, the work-time calculation unit 14 calculates the time taken for each motion of the robot by a combination of each of the motions ("approach", "hold", ⋯) in the information of the sub modules of the motion level and a waiting time. Furthermore, each motion is assumed to have an operating speed (s) expressed by percentage as a parameter. The work-time calculation unit 14 obtains a time (Tact, A) taken for a motion (A) of the robot by the following calculating expression (1).

$$T_{act,A} = \frac{s \cdot c \cdot N_{move}}{100} + \sum_{i \in A} T_{sleep,i} \qquad (1)$$

In this expression, c is a conversion factor [sec/step] depending on equipment. $N_{move}$ is the number of motion steps in the motion (A). $T_{sleep}$ is a waiting time [sec] .

After Step S13 or Step S14, the work-time calculation unit 14 calculates the sum of work times of respective motions taken for the assembly work (Step S15). Specifically, the work-time calculation unit 14 obtains the sum of work times of respective motions taken for a work (X) by the following expression (2).

$$T_X = \sum_{j \in X} T_{act,j} \qquad (2)$$

Next, the work-time calculation unit 14 outputs the calculated work time of each work as the work time table 2a or the like to the evaluation-value calculation unit 15 (Step S16) to end the processing.

Subsequent to the processing of calculating the work time of the subject work (Step S4), the work-time calculation unit 14 sequentially checks the works (modules) of the respective work stations and detects the number of times of switching of tools or components (Step S5). Next, the work-time calculation unit 14 calculates the time taken for the switching with respect to each of the work stations based on the detected number of times of switching (Step S6).

Subsequently, the work-time calculation unit 14 calculates the sum of work times of the subject work, the additional work, and the tool switching to calculate the cycle time with respect to each of the work stations (Step S7). Next, the work-time calculation unit 14 outputs the calculated cycle time to the evaluation-value calculation unit 15 to end the processing.

As described above, the process planning support apparatus 1 has the process/work-order setting unit 12 that sets allocation of works to the work stations A to D in the assembly line 20. The process planning support apparatus 1 also has the work-time calculation unit 14 that calculates, for the work allocated to each of the work stations A to D, the work time corresponding to the relevant work subject based on the assembly-work module library 10a with respect to each of unit works, in which each unit work is expressed by a combination of element works each including motions as constituent elements. The process planning support apparatus 1 further has the evaluation-value calculation unit 15 that calculates the evaluation index (the cycle time or the cost, for example) with respect to each of the work stations A to D based on the work time calculated by the work-time calculation unit 14. The process planning support apparatus 1 has the evaluation-result output unit 16 that outputs the evaluation index calculated by the evaluation-value calculation unit 15 to a display or the like to present the evaluation index to the user 2.

The process planning support apparatus 1 can perform a design support in a case where the user 2 designs process planning by presenting the evaluation index calculated with respect to each of the work stations A to D to the user 2. Specifically, the user 2 can easily confirm the evaluation indexes of the respective work stations A to D, which greatly differ according to the work subjects (a robot or a worker, for example) in the work stations A to D without performing setting of a fine movement in a case where the work subject is a robot.

Furthermore, because the work-time calculation unit 14 adds the work time taken for the additional work according to the work subject, the process planning support apparatus 1 can present the evaluation index to which the additional work is also considered according to the work subject to the user 2.

The process planning support apparatus 1 also has the work-order-restriction determination unit 13 that checks the execution order of allocated works based on the restriction information on the execution order of the works. Therefore, work allocation according to the execution order can be set to the respective work stations.

The respective constituent elements of each of the illustrated devices do not always need to be physically configured as illustrated. That is, specific modes of distribution or integration of the devices are not limited to those illustrated, and all or some of the devices can be configured to be functionally or physically distributed or integrated in an arbitrary unit according to various loads or use statuses.

All or an arbitrary part of various processing functions performed in the process planning support apparatus 1 can be performed on a CPU (Central Processing Unit) (or a microcomputer such as an MPU (Micro Processor Unit) or an MCU (Micro Controller Unit)). It is needless to mention that all or an arbitrary part of the various processing functions can be performed on a program that is analyzed and executed by a CPU (or a microcomputer such as an MPU or an MCU) or on hardware using wired logic. The various processing functions performed in the process planning support apparatus 1 can be performed in corporation of a plurality of computers through cloud computing.

The various types of processing described in the above embodiment can be realized by executing a program prepared in advance on a computer. An example of a computer (hardware) that executes a program having identical functions to those in the above embodiment is described below. FIG. 10 is a block diagram illustrating a hardware configuration example of the process planning support apparatus 1 according to the present embodiment.

As illustrated in FIG. 10, the process planning support apparatus 1 has a CPU 101 that performs various types of computing processing, an input device 102 that receives a data input, a monitor 103, and a speaker 104. The process planning support apparatus 1 also has a medium reading device 105 that reads a program and the like from a storage medium, an interface device 106 for connecting to various devices, and a communication device 107 for communicating with and connecting to an external device wiredly or wirelessly. The process planning support apparatus 1 further has a RAM 108 that temporarily stores therein various types of information, and the hard disk device 109. The respective components (101 to 109) in the process planning support apparatus 1 are connected to a bus 110.

A program 111 for performing various types of processing in the work modeling unit 11, the process/work-order setting unit 12, the work-order-restriction determination unit 13, the work-time calculation unit 14, the evaluation-value calculation unit 15, and the evaluation-result output unit 16 described in the above embodiment is stored in the hard disk device 109. Various data 112 (such as the assembly-work module library 10a, the equipment/jig information 10b, and the standard time DB 10c) that is referred to by the program 111 is also stored in the hard disk device 109. The input device 102 receives an input of operation information from an operator of the process planning support apparatus 1, for example. The monitor 103 displays various screens to be operated by the operator, for example. For example, a printing device is connected to the interface device 106. The communication device 107 is connected to a communication network such as a LAN (Local Area Network) and exchanges various types of information with an external device via the communication network.

The CPU 101 reads the program 111 stored in the hard disk device 109 and loads the program 111 on the RAM 108 to execute the program 111, thereby performing various types of processing. The program 111 does not always need to be stored in the hard disk device 109. For example, the process planning support apparatus 1 can read the program 111 stored in a readable storage medium and execute the read program 111. A storage medium readable by the process planning support apparatus 1 corresponds to a portable recording medium such as a CD-ROM, a DVD disk, or a USB (Universal Serial Bus) memory, a semiconductor memory such as a flash memory, and a hard disk drive, for example. The program 111 can be stored in a device connected to a public circuit, the Internet, a LAN, or the like and the process planning support apparatus 1 can read the program 111 therefrom to execute the read program 111.

According to an embodiment of the present invention, it is possible to easily create process planning for an assembly line.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A process planning support apparatus comprising:

   a setting unit (12) that sets allocation of works with respect to each of work stations in an assembly line;
   a first calculation unit (14) that calculates work times corresponding to work subjects of the work stations based on library data of each of unit works, in which each unit work is expressed by a combination of element works each having motions as constituent elements, for the works allocated to the work stations, respectively;
   a second calculation unit (15) that calculates evaluation indexes of the work stations based on the calculated work times, respectively; and
   an output unit (16) that outputs the calculated evaluation indexes.

2. The process planning support apparatus according to claim 1, wherein when the work subject is a human, the first calculation unit calculates work times of element works combined in a unit work corresponding to the allocated work based on time information indicating a work time in a case where a human performs each element work.

3. The process planning support apparatus according to claim 1 or 2, wherein when the work subject is a robot, the first calculation unit calculates an execution time taken by the robot to perform each of motions constituting element works combined in a unit work corresponding to the allocated work and obtains a sum of the calculated execution times as a work time.

4. The process planning support apparatus according to any of claims 1 to 3, wherein the first calculation unit further adds a work time taken for an additional work corresponding to the work subject.

5. The process planning support apparatus according to any of claims 1 to 4, wherein
   the library data further includes restriction information on an execution order of the unit works, and
   a determination unit (13) that checks an execution order of the allocated works based on the restriction information is further included.

6. The process planning support apparatus according to any of claims 1 to 5, wherein
   the second calculation unit calculates a cycle time or a cost of each of the work stations based on the calculated work times, and
   the output unit outputs the calculated cycle time or cost of each of the work stations.

7. A process planning support method comprising:

   setting allocation of works with respect to each of work stations in an assembly line;
   calculating work times corresponding to work subjects of the work stations based on library data of each of unit works, in which each unit work is expressed by a combination of element works each having motions as constituent elements, for the works allocated to the work stations, respectively;
   calculating evaluation indexes of the work stations based on the calculated work times, respectively; and
   outputting the calculated evaluation indexes.

8. A process planning support program causing a computer to perform:

   setting allocation of works with respect to each of work stations in an assembly line;
   first calculating work times corresponding to work subjects of the work stations based on library data of each of unit works, in which each unit work is expressed by a combination of element works each having motions as constituent elements, for the works allocated to the work stations, respectively;
   second calculating evaluation indexes of the work stations based on the calculated work times, respectively; and
   outputting the calculated evaluation indexes.

# FIG.1

# FIG.2

20

21A  21B  21C  21D

PRODUCT

A  B  C  D

# FIG.3

2a

| | WORK TIME | A | B | C | D | E |
|---|---|---|---|---|---|---|
| WORK a | 10.0 | ● | | | | |
| WORK b | 5.0 | | ● | | | |
| WORK c | 4.0 | | ● | | | |
| WORK d | 3.0 | | | ● | | |
| WORK e | 8.0 | | | ● | | |
| WORK f | 10.0 | | | | ● | |
| WORK g | 3.0 | | | | | ● |
| WORK h | 4.0 | | | | | ● |

⋮          ⋮          ⋮    ⋮    ⋮    ⋮    ⋮

⇩

3

CYCLE TIME [SEC]

# FIG.4

UNIT WORK

IDENTIFIER, NAME, CLASSIFICATION, REMARK, COMPONENT, ATTACHMENT-DESTINATION COMPONENT, AUTOMATION DIFFICULTY LEVEL, WORK SUBJECT, TRUTH VALUE AS TO WHETHER IT IS ADDITIONAL WORK          30a

10a

1 1..n

EACH-WORK-SUBJECT-DIRECTED UNIT WORK

WORK SUBJECT, TOOL, JIG, EQUIPMENT/PERIPHERAL DEVICE          30b

1 0..n

31

ELEMENT WORK

IDENTIFIER, NAME, CLASSIFICATION, WORKPIECE COMPONENT, TOOL, JIG, EQUIPMENT, WORK TIME, REMARK

1 1..n

32

MOTION

FIG.5

# FIG.6

⌇30

FIT COMPONENT X TO COMPONENT Y

⌇31

PICK UP COMPONENT X FROM SUPPLY POSITION

⌇32

STRETCH ARM TO COMPONENT SUPPLY POSITION

↓

⌇32

HOLD COMPONENT X

↓

⌇32

PICK UP COMPONENT X

↓

⌇31

CARRY COMPONENT X ON COMPONENT Y

↓

⌇31

FIT COMPONENT X TO COMPONENT Y

# FIG.7

COMPLETED LATER ←——————————————————— WORK TO BE COMPLETED FIRST

WORK COMPLE-TION (ROOT)

41

#0-0

#0-1, #1-0

#0-2

#0-3

#1-1

42

#1-2

#1-3, #2-3

#1-4

#2-0

#2-1

#2-2

40

#3-0

#3-1, #4-0, #5-1

#3-2

#5-0

#4-1

EP 3 282 406 A1

# FIG.8

START

↓ S1

ADDITIONALLY ALLOCATE ADDITIONAL WORK OF
COMPONENT SETTING/RESETTING TO WORKER
ADJACENT TO ROBOT WORK STATION

↓ S2

ADDITIONALLY ALLOCATE ADDITIONAL WORK OF
LOADING/UNLOADING TO ROBOT WORK STATION

↓ S3

CALCULATE TIME TAKEN FOR ADDITIONAL WORK FROM
PARAMETERS SET IN EQUIPMENT/JIG INFORMATION

↓ S4

CALCULATE WORK TIME OF SUBJECT WORK

↓ S5

SEQUENTIALLY CHECK WORKS OF RESPECTIVE WORK STATIONS AND
DETECT NUMBER OF TIMES OF TOOL/COMPONENT SWITCHING

↓ S6

CALCULATE TIME TAKEN FOR SWITCHING
WITH RESPECT TO WORK STATION

↓ S7

CALCULATE CYCLE TIME OF WORK STATION
(SUM OF SUBJECT WORK, ADDITIONAL WORK, AND TOOL SWITCHING)

↓

END

# FIG.9

START

S10
ACQUIRE DATA OF ASSEMBLY WORK

S11
LOAD DATA OF ASSEMBLY WORK

S12
WHAT IS WORK SUBJECT? ──「ROBOT」

「HUMAN」 S13
ACQUIRE TIME OF EACH MOTION BY REFERRING TO STANDARD TIME DB

S14
CALCULATE TIME TAKEN FOR EACH MOTION USING INFORMATION OF SUB MODULES OF MOTION LEVEL

S15
CALCULATE SUM OF WORK TIMES OF RESPECTIVE MOTIONS TALEN FOR ASSEMBLY WORK

S16
OUTPUT WORK TIME

END

# FIG.10

Europäisches
Patentamt

European
Patent Office

Office européen
des brevets

# EUROPEAN SEARCH REPORT

Application Number

EP 17 18 0251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 525 315 A1 (HITACHI LTD [JP]) 21 November 2012 (2012-11-21) * paragraph [0047] - paragraph [0057]; figures 1,5 * ----- | 1-8 | INV. G06Q10/04 G06Q10/06 G06Q10/10 G06Q50/04 |
| X | US 6 249 715 B1 (YURI HIDETAKA [JP] ET AL) 19 June 2001 (2001-06-19) * column 6, line 53 - column 14, line 4; figures 1,3,4,7 * ----- | 1-8 | |

TECHNICAL FIELDS
SEARCHED      (IPC)

G06Q

The present search report has been drawn up for all claims

| Place of search | Date of completion of the search | Examiner |
|---|---|---|
| Munich | 14 December 2017 | Pastore, Edoardo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 18 0251

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2017

| Patent document cited in search report | | Publication date | Patent family member(s) | | Publication date |
|---|---|---|---|---|---|
| EP 2525315 | A1 | 21-11-2012 | EP 2525315 A1<br>JP 5519575 B2<br>JP 2012242981 A | | 21-11-2012<br>11-06-2014<br>10-12-2012 |
| US 6249715 | B1 | 19-06-2001 | CN 1197966 A<br>EP 0866411 A1<br>JP H10261122 A<br>US 6249715 B1 | | 04-11-1998<br>23-09-1998<br>29-09-1998<br>19-06-2001 |

EPO FORM P0459

For more details about this annex : see Official Journal of the European Patent Office, No. 12/82